Europäisches Patentamt

European Patent Office

Office européen des brevets

(11) Veröffentlichungsnummer: **0 122 873**
A2

(12) # EUROPÄISCHE PATENTANMELDUNG

(21) Anmeldenummer: 84730029.0

(22) Anmeldetag: 27.03.84

(51) Int. Cl.³: **F 16 F 7/10**
F 16 F 3/00, F 16 F 15/02
F 16 F 9/00

(30) Priorität: 15.04.83 DE 3313939

(43) Veröffentlichungstag der Anmeldung:
24.10.84 Patentblatt 84/43

(84) Benannte Vertragsstaaten:
AT BE CH FR GB IT LI LU NL SE

(71) Anmelder: GERB Gesellschaft für Isolierung mbH & Co. KG
Roedernallee 174-176
D-1000 Berlin 51(DE)

(72) Erfinder: Delam, Heinz
Blakenheideweg 3
D-1000 Berlin 20(DE)

(74) Vertreter: Müller-Börner, Richard, Dipl.-Ing. et al,
Patentanwälte Müller-Börner, Wey & Körner
Podbielskiallee 68
D-1000 Berlin-Dahlem 33(DE)

(54) Elastisches Lagerungselement zur schwingungsidolierenden und körperschallisolierenden Aufstellung von Aggregaten.

(57) Bei einem Federkörper zur schwingungs- und körperschallisolierenden Aufstellung von Aggregaten sind mehrere Einzelfedern 3 mit hohen Eigenfrequenzen hintereinandergeschaltet und durch zwischenmassen 6 bezüglich ihrer Kontinuumschwingungen voneinander entkoppelt. Die Federresonanzen werden durch Einbettungsmedien 7 bedämpft und/oder durch Zwischenlagen 8 abgeschirmt.

EP 0 122 873 A2

./...

Croydon Printing Company Ltd.

FIG.1

- 1 -

Elastisches Lagerungselement zur schwingungsisolierenden und körperschallisolierenden Aufstellung von Aggregaten

Die vorliegende Erfindung betrifft ein elastisches Lagerungselement zur schwingungsisolierenden und körperschallisolierenden Aufstellung von Aggregaten und Schallemissionsquellen.

Für die schwingungsisolierende und körperschallisolierende Aufstellung von Aggregaten sind als Stand der Technik bekannt:

- 2 -

1. Druck- und schubbeanspruchte Elastomer-Federn unterschiedlichster Geometrie;

2. Stahlfedern unterschiedlichster Geometrie, beispielsweise Stahlschraubenfedern, Tellerfedern, Stahldrahtfedern;

3. Stahlschraubenfedern mit eingebettetem Metallkissen;

4. Stahlschraubenfedern, die teilweise mit viskoelastischen Materialien vergossen sind;

5. Stahlschraubenfedern mit elastischen Zwischenlagen an den Federaufstellflächen.

Für die Schwingungsisolierung wird meist die Bewegung einer elastisch aufgestellten Maschine als Starrkörper auf Federn betrachtet. Die Eigenfrequenzen dieses Systems müssen in bekannter Weise weit genug von den Betriebsdrehzahlen der Maschine entfernt gelegt werden, was im allgemeinen durch eine entsprechende Wahl der Federelastizität erreicht wird.

Die Federzahl solcher Lagerungselemente wird durch den Elastizitätsmodul des Federwerkstoffes und die Federgeometrie bestimmt. Dafür sind die unter Ziffer 1. und 2. genannten Federn im allgemeinen ausreichend.

Außer den drehzahlabhängigen Erregerkräften strahlen Maschinen aber auch Schwingungen in einem breiten Frequenzbereich ab. Sie können auf verschiedenste Weise durch den Betrieb und die Bauart der Maschine bedingt sein. Die über die Schwingungen des Maschingehäuses und über die Maschinenfüße an die Umgebung abgegebene Schwingbeschleunigung wird als Körperschall bezeichnet.

Für bestimmte Anwendungsfälle soll neben den drehzahlabhängigen Erregerkräften auch möglichst kein Körperschall überhaupt oder in einem bestimmten Frequenzbereich an den Aufstellort emittiert werden.

Die elastischen Aufstellelemente zur Schwingungsisolierung sind Körperschallbrücken zwischen dem Aggregat und der Aufstellfläche. Ihre Eigenschaften bestimmen daher die Körperschalleinstrahlung in den Aufstellort.

Federn sind massebehaftet, elastisch und dämpfend. Sie besitzen dementsprechend als Kontinuum Eigenfrequenzen und damit mehr oder weniger ausgeprägte Resonanzen. Eine Resonanzspitze bedeutet jedoch eine leichte Anregbarkeit des Lagerungselementes, was einen Einbruch in der Kurve der Schalldämmung über der Frequenz nach sich zieht.

Die in Ziffer 2. aufgeführten Metallfedern haben eine von ihrer Form abhängige Eigenfrequenz bei nur geringer Dämpfung. Die recht genau berechenbare Grundfrequenz und die erste Oberschwingung bringen in dem körperschallkritischen Frequenzbereich einen relativ starken Abfall der Dämmkurve; außerhalb der Resonanzen ist dagegen die Isolierung gut.

Die in Ziffer 1. aufgeführten Elastomer-Federn zeichnen sich dadurch aus, daß sie neben der Elastizität eine gewisse Dämpfung besitzen. Infolgedessen wird ein Teil der Körperschallenergie absorbiert, wodurch man wegen weniger ausgeprägter Resonanzspitzen eine recht gute Dämmung im geforderten Frequenzbereich erzielt. Aus betrieblichen Gründen, wie zum Beispiel Fließverhalten, Alterungsbeständigkeit, Beständigkeit gegen Öl, aggressive Medien usw. können Elastomer-Federn oft nicht eingesetzt werden.

Bei den in den Ziffern 3. bis 5. aufgeführten Einzelfedern werden mit elastischen und dämpfenden Einbettungen entweder die Eigenschwingung der Feder bedämpft (Ziffer 3. Stahlwollekissen; Ziffer 4. Silikonkautschuk) oder die Resonanzschwingung durch eine elastisch-plastische Zwischenlage (Ziffer 5.) mit hoher Energiedissipation gegenüber der Aufstellfläche abgeschirmt. Dies gelingt jedoch oft im Bereich der niederfrequenten Hauptresonanz der Feder nicht ausreichend.

Der Erfindung liegt daher die Aufgabe zugrunde, eine elastische Lagerungsmöglichkeit für Aggregate zu schaffen, die zuverlässig gegen Schwingungen und Körperschall isoliert.

Zur Lösung dieser Aufgabe wird erfindungsgemäß vorgeschlagen, daß die Aufstellelastizität aus mehreren hintereinander geschalteten Federn mit hohen Eigenfrequenzen besteht, die durch ausreichend große, verbindende Zwischenmassen in den Eigenschwingungen voneinander entkoppelt sind. Mit anderen Worten soll das elastische Lagerungselement aus mehreren Einzelfedern mit hohen Eigenfrequenzen aufgebaut werden, die hintereinander geschaltet sind und deren Kontinuumschwingungen durch Zwischenmassen voneinander unabhängig gemacht sind.

-5-

Der Aufbau des Lagerungselementes kann dabei den Erfordernissen angepaßt mit gleichen Federn und Massen, gleichen Federn und unterschiedlichen Massen sowie unterschiedlichen Federn und gleichen Massen ausgeführt werden.

Mit der Erfindung erreicht man das Verschieben der Eigenresonanzen der Federn in einen weniger empfindlichen, höherfrequenteren Körperschallbereich.

Für die schwingungsisolierte Aufstellung von Maschinen, Aggregaten und anderen Schallemissionsquellen sind niedrige Eigenfrequenzen notwendig. Der Begriff niedrig orientiert sich hier an der Erregerfrequenz. In der Regel muß das Verhältnis von Erregerfrequenz zu Eigenfrequenz mindestens 3 : 1, besser 4 : 1 betragen. Aus dieser Definition wird auch der vorerwähnte Begriff "hohe" Eigenfrequenz abgeleitet. Die Eigenfrequenz ist hoch, wenn sie diesen für eine Schwingungsisolierung erforderlichen Abstimmungsverhältnissen als Einzelfeder nicht mehr entspricht.

Erst die erfindungsgemäße Hintereinanderschaltung von Federn mit relativ hoher Eigenfrequenz ergibt eine Gesamtelastizität und somit eine entsprechend den Abstimmungsverhältnissen geforderte niedrige Eigenfrequenz.

Eine Feder hat aber nicht nur eine Gesamtelastizität und somit in Zusammenhang mit einer von ihr getragenen Masse eine niedrige Eigenfrequenz, sondern die einzelnen Federwindungen besitzen außer der Elastizität auch eine Masse. Dieses Verhältnis Windungselastizitäten zu den

– 6 –

Windungsmassen ist ein Maß für eine definierte hohe Eigenfrequenz, die wesentlich höher liegt als das der auf der Feder gelagerten Masse.

Wird nun eine Feder in mehrere Einzelfedern aufgelöst, so muß die Zwischenmasse das Vielfache einer einzelnen Federwindung wiegen, um den gewünschten Zweck zu erzielen. Für dieses Vielfache läßt sich zwar kein genaues Maß angeben, doch ist festgestellt worden, daß das Zwei- bis Dreifache für gewisse Anwendungsgebiete schon ausreicht, und daß ein höheres Verhältnis für andere Aufgabenstellungen erzielt werden muß.

Da sich Kontinuumsresonanzen höherer Frequenzen im allgemeinen gut bedämpfen lassen, sollten die jetzt dorthin verschobenen Resonanzen vorteilhaft durch Einbetten der Einzelfedern und/oder elastisch-plastische Zwischenlagen an den Federenden unterdrückt werden.

Mit der Erfindung läßt sich eine Schwingungsisolierung und eine sehr gute Körperschalldämmung über den geforderten Frequenzbereich zuverlässig erzielen.

Zusätzliche Weiterbildungen der Erfindung sind in den Unteransprüchen angegeben.

Die Erfindung wird nachstehend anhand eines in der Zeichnung dargestellten Ausführungsbeispiels des Erfindungsgegenstandes ausführlich erläutert.

-7-

Es zeigen

Fig. 1   eine schematische Schnittansicht eines Lagerungselementes
mit zwei Federn und einer Zwischenmasse gemäß der Erfindung;

Fig. 2   ein Diagramm der Körperschalldämmung verschiedener
Lagerungselemente.

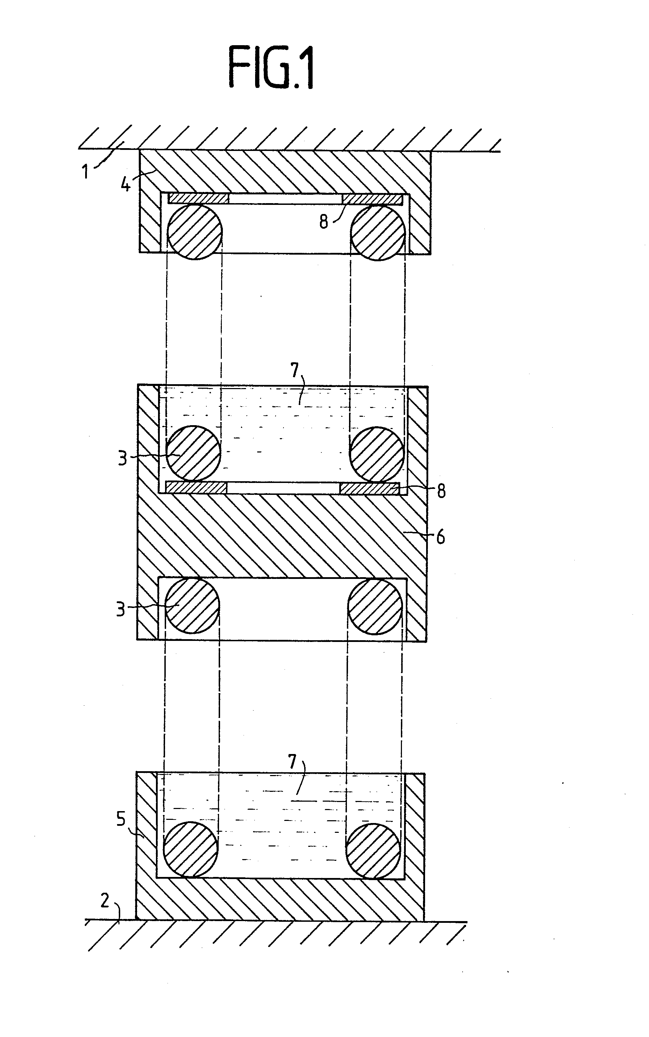

Das zwischen dem Aggregat 1 und dem Aufstellort 2 angeordnete, elastische Lagerungselement nach Fig. 1 besteht aus zwei Stahlschraubenfedern 3, die durch einen oberen Federteller 4 gegen das Aggregat 1 und durch einen unteren Federteller 5 zur Aufstellfläche 2 zentriert werden. Beide Fedem 3 sind durch eine Zwischenmasse 6 voneinander elastisch entkoppelt. Die Zwischenmasse 6 ist demnach so groß ausgelegt, daß sie für die Kontinuumschwingung der Einzelfeder 3 die Randbedingung einer quasi starren Auflage erfüllt. Im Vergleich zu einer durchgehenden beispielsweise gleich großen Einzelfeder niedriger Eigenfrequenz gelingt es, die Kontinuums-Resonanzfrequenzen auf mindestens den doppelten Wert anzuheben.

Die Federn 3 sind teilweise in viskoelastischen Massen 7 eingebettet, um die Resonanzspitzen der Kontinuumsschwingung zusätzlich zu bedämpfen.

Zusätzlich ist die Eigenschwingung durch zwischen der Feder 3 und dem Federteller 4 bzw. der Zwischenmasse 6 angeordnete, elastisch-plastische und dämpfende Zwischenlagen 8 abgeschirmt. Als Material der Zwischenlage 8 sollten Stoffe mit hoher Werkstoffdämpfung gewählt werden,

- 8 -

so daß durch die Reihenschaltung mit der Feder ihrer Resonanzschwingung Energie entzogen wird. Die Zwischenlagen 8 können - den Körperschallanforderungen angepaßt - über oder unter, an einer oder an mehreren Stellen vorgesehen sein.

Konstruktiv bietet es sich an, Federteller 5 und Zwischenmasse 6 so zu gestalten, daß sie die Federn 3 zentrieren und gleichzeitig mit viskoelastischen Dämpfungsmedien 7 verfüllt werden können.

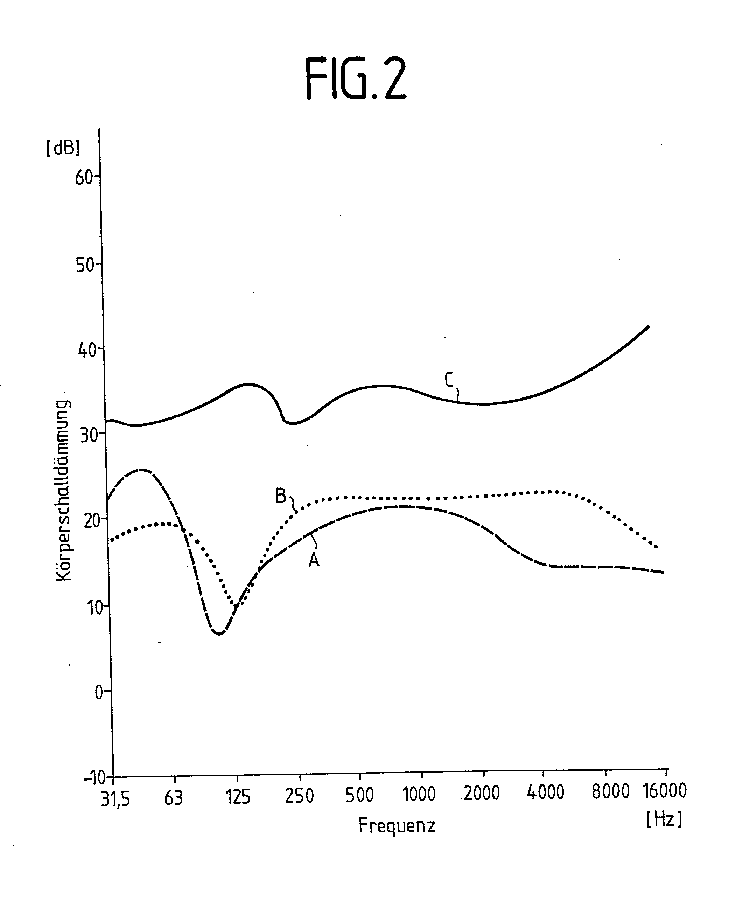

In Fig. 2 ist das Dämpfungsverhalten unterschiedlicher Lagerungselemente, d.h. das Verhältnis aus Ausgangs- zu Eingangs-Beschleunigung am Lagerungselement, im Körperschallbereich schematisch gegenübergestellt. So zeigt die Kurve A das Dämmverhalten bei Verwendung von einzelnen Stahlschraubenfedern mit einem charakteristischen Einbruch der Dämmkurve bei der ersten Kontinuumresonanz (120 Hz) und dem relativ guten Dämmverhalten darüber hinaus. Die Kurve B steht beispielhaft für Elastomer-Federn mit einer aufgrund ihrer Werkstoffdämpfung weniger ausgeprägten Resonanzspitze (125 Hz) und einer mindestens so guten Schalldämmung im höherfrequenten Bereich. Die Kurve C offenbart das vorteilhafte Dämmverhalten des erfindungsgemäßen Lagerungselementes. Im Falle der Reihenschaltung zweier Federn mit einer Zwischenmasse sowie Bedämpfung der Kontinuumschwingungen infolge des Einbettens der Federenden und durch elastisch-plastische Zwischenlagen wird die insbesondere erste Kontinuumresonanz zu höheren Frequenzen (250 Hz) verschoben und wie alle anderen Eigenschwingungen bedämpft, was die sehr gute Körperschalldämmung des erfindungsgemäßen Lagerungselementes bewirkt.

- 9 -

Patentansprüche

1. Elastisches Lagerungselement zur schwingungsisolierenden und körperschallisolierenden Aufstellung von Aggregaten und Schallemissionsquellen, dadurch gekennzeichnet, daß die Aufstellelastizität aus mehreren hintereinander geschalteten Federn (3) mit hohen Eigenfrequenzen besteht, die durch ausreichend große, verbindende Zwischenmassen (6) in den Eigenschwingungen voneinander entkoppelt sind.

2. Lagerungselement nach Anspruch 1, dadurch gekennzeichnet, daß die Einzelfedern (3) durch Einbettungsmedien (7) entsprechend den Erfordernissen der Körperschallisolierung bedämpft sind.

3. Lagerungselement nach Anspruch 1 oder 2, dadurch gekennzeichnet, daß zwischen den Aufstellflächen der Federn (3) und den Federtellern (4, 5) und/oder den Zwischenmassen (6) elastisch-plastische Zwischenlagen (8) mit hoher Werkstoffdämpfung angeordnet sind.

4. Lagerungselement nach Anspruch 2, dadurch gekennzeichnet, daß die Einbettungsmedien (7) aus Bitumina bestehen.

5. Lagerungselement nach Anspruch 2, dadurch gekennzeichnet, daß die Einbettungsmedien (7) aus Siliconkautschuk bestehen.

6. Lagerungselement nach Anspruch 2, dadurch gekennzeichnet, daß die Einbettungsmedien (7) aus Siliconöl bestehen.

7. Lagerungselement nach Anspruch 3, dadurch gekennzeichnet, daß die Zwischenlagen (6) aus weichen Polyvenylchloriden bestehen.

# FIG.1

# FIG.2